(19) Europäisches Patentamt
European Patent Office
Office européen des brevets

(11) **EP 1 203 675 B1**

(12) **EUROPEAN PATENT SPECIFICATION**

(45) Date of publication and mention
of the grant of the patent:
**23.12.2009 Bulletin 2009/52**

(51) Int Cl.:
***B60C 23/06*** *(2006.01)*

(21) Application number: **01309203.6**

(22) Date of filing: **30.10.2001**

(54) **Apparatus and method for alarming decrease in tyre air pressure**

Vorrichtung und Verfahren zum Detektieren eines Druckabfalls im Reifen

Appareil et procédé pour la détection d'une baisse de pression dans un pneumatique

(84) Designated Contracting States:
**DE FR GB**

(30) Priority: **31.10.2000 JP 2000333959**

(43) Date of publication of application:
**08.05.2002 Bulletin 2002/19**

(73) Proprietors:
• **Sumitomo Rubber Industries, Ltd.
Kobe-shi,
Hyogo-ken (JP)**
• **SUMITOMO ELECTRIC INDUSTRIES, LTD
Osaka-shi
Osaka-fu (JP)**

(72) Inventor: **Kitano, Masashi,
c/o Sumitomo Rubber Ind. Ltd.
Kobe-shi,
Hyogo-ken (JP)**

(74) Representative: **Manitz, Finsterwald & Partner
GbR
Postfach 31 02 20
80102 München (DE)**

(56) References cited:
**EP-A- 0 657 314    EP-A- 0 989 001
GB-A- 2 226 434    US-A- 5 721 528**

**Description**

The present invention relates to an apparatus and method for alarming decrease in tyre air pressure. More particularly, the present invention relates to an apparatus and method for alarming decrease in tyre air pressure capable of properly informing a decompressed condition of a tyre to a driver of a vehicle such that the driver can drive safely.

GB-A-2 226 434 discloses a tyre alarming system according to the preamble of claim 1.

It is conventionally known for a system for alarming decrease in tyre air pressure (DWS) to detect decompression of a tyre based on rotational (wheel speed) information of four wheels. Such a system is based on the theory that the rotational velocity or rotational angular velocity of a decompressed tyre is increased when compared to that of other normally inflated tyres since its outer diameter (dynamic load radius of the tyre) is decreased in contrast to tyres at normal internal pressure. In a method for detecting decrease in internal pressure on the basis of such a relative difference of rotational angular velocities of tyres (refer to Japanese Unexamined Patent Publication No. 305011/1988), a judged value DEL is defined as follows:

$$DEL = \{(F1+F4)/2-(F2+F3)/2\}/\{(F1+F2+F3+F4)/4\}\times100(\%)$$

When the judged value exceeds a threshold which has preliminarily been properly adjusted, the driver is informed of a decrease in internal pressure. Here, F1 to F4 are the rotational angular velocities of front left tyre, front right tyre, rear left tyre and rear right tyre, respectively. In such a method, in the case where the threshold is set so that decompression of a tyre by 30% from normal internal pressure is surely detected, the driver is alarmed of decompression when the internal pressure has decrease by approximately 30%.

In such a conventional method, no information is supplied to the driver until decompression has progressed to 30%. That is, no information is given until the set threshold has been exceeded. If the driver could be informed of a decompressed condition in which the decompression gradually progresses or when decompression has progressed to 20%, then a sudden alarm which causes anxiety to the driver can be avoided so the driver can continue driving safely and can accordingly arrange for repair of the tyre in question.

The present invention has been made in view of the above circumstances, and it is an object thereof to provide an apparatus and method for alarming decrease in tyre air pressure capable of properly informing a decompressed condition of a tyre to a driver of a vehicle such that the driver might drive safely.

According to one aspect of the present invention, there is provided an apparatus for alarming decrease in tyre air pressure based on rotational information obtained from tyres attached to a vehicle, comprising a rotational information detecting means for detecting rotational information of the respective tyres; a rotation information memory means for storing the rotational information of the respective tyres; a judged value calculating means for calculating judged values based on the rotational information of the respective tyres; a judged value memory means for storing the judged values; a transition calculating means for calculating transition of the judged values based on the stored judged values; a judging means for determining a decreasing tendency in tyre air pressure based on the judged values; and an alarming means for issuing preliminary alarm prior to issuing a predetermined alarm for informing the decreasing tendency in internal pressure based on the calculated transition of the judged values in case the judged value tends to move to exceed a predetermined threshold for determining a decrease in internal pressure.

According to another aspect of the present invention, there is provided a method for alarming decrease in tyre air pressure based on rotational information obtained from tyres attached to a vehicle, comprising the steps of detecting rotational information of the respective tyres; storing the rotational information of the respective tyres; calculating judged values based on the rotational information of the respective tyres; storing the judged values; calculating transition of the judged values based on the stored judged values; determining a decreasing tendency in tyre air pressure based on the judged values; and issuing preliminary alarm prior to issuing a predetermined alarm for informing the decreasing tendency in internal pressure based on the calculated transition of the judged values in case the judged value tends to move to exceed a predetermined threshold for determining a decrease in internal pressure.

The apparatus and method for alarming decrease in tyre air pressure according to the present invention will now be explained in details with reference to the accompanying drawings, in which:

Figure 1 is a block diagram illustrating one embodiment of the apparatus for alarming decrease in tyre air pressure according to the present invention;
Figure 2 is a block diagram illustrating the electrical arrangements of the apparatus for alarming decrease in tyre air pressure in Figure 1;
Figure 3 is a flow chart related to one embodiment of the present invention; and
Figure 4 is a diagram illustrating transition in judged values.

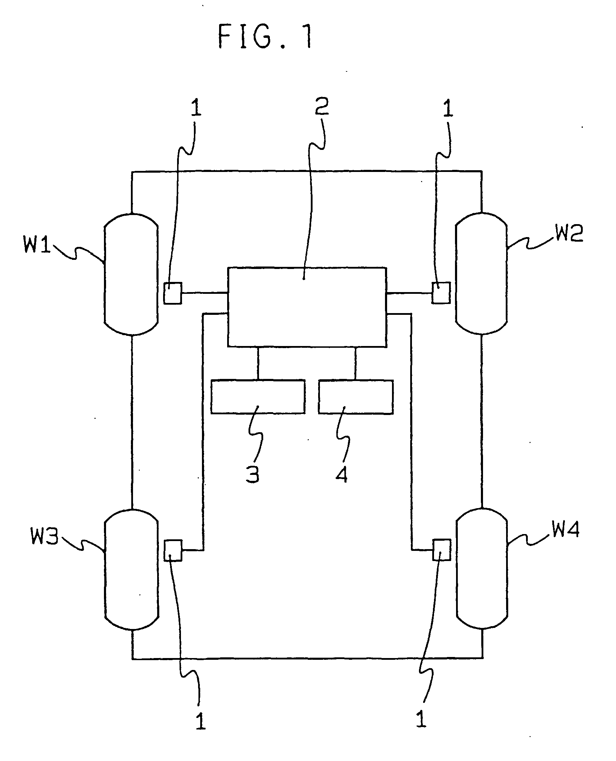

As shown in Figure 1, the apparatus for alarming decrease in air pressure is for detecting whether the air pressure of any of four wheels W1, W2, W3 and W4 (W1: front left tyre, W2: front right tyre, W3: rear left tyre, and W4: rear right tyre, hereinafter referred generally to as Wi) attached to a four wheels vehicle has decreased or not, and comprises rotational information detecting means 1, which is an ordinary wheel speed sensor, respectively arranged in connection with each of the tyres Wi. The rotational information detecting means 1 is not particularly limited in the present invention so long as it can detect rotational information, for example, the number of revolutions, rotational speed, angular velocity or the like of each of the tyres. The rotational information detecting means 1 might be a wheel speed sensor for generating rotational pulses by using an electromagnetic pickup or similar device to obtain wheel speeds (rotational speeds) on the basis of the number of pulses, or an angular velocity sensor including those in which electricity is generated by utilising rotation such as a dynamo to obtain the wheel speed on the basis of the generated voltage thereof. Outputs of the rotational information detecting means 1 are supplied to a control unit 2 which may be an ABS or a separate control unit.

To the control unit 2, there are connected a display means 3, which is an alarming means, composed of liquid crystal display elements, plasma display elements, or CRT for informing which tyre Wi has decreased pressure, and an initialisation switch 4 which can be operated by the driver.

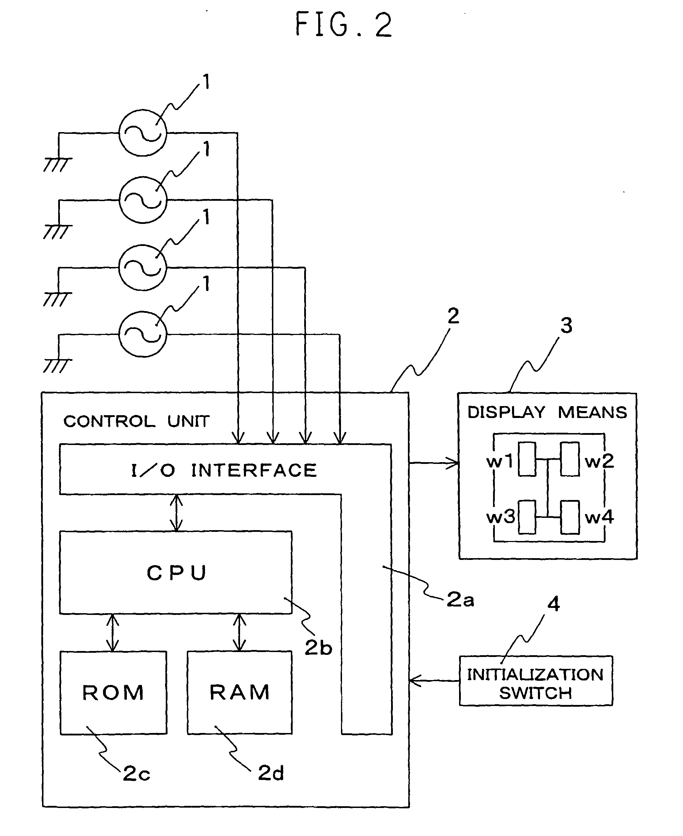

The control unit 2 comprises, as shown in Figure 2, an I/O interface 2a required for sending/receiving signals to/from an external device, a CPU 2b which functions as a centre of calculation, a ROM 2c which stores a control operation program for the CPU 2b, and a RAM 2d into which data is temporarily written and are read out therefrom when the CPU 2b performs control operations.

In the present embodiment, the apparatus comprises a rotational information detecting means for detecting rotational information of the respective tyres, a rotational information memory means for storing the rotational information of the respective tyres, a judged value calculating means for calculating judged values based on the rotational information of the respective tyres, a buffer for accumulating judged values which is a judged value memory means for storing the judged values, a transition calculating means for calculating transition of the judged values based on the stored judged values, a judging means for determining a decrease in tyre air pressure based on the judged values, and an alarming means for issuing preliminary alarm prior to issuing a predetermined alarm for informing decrease in internal pressure based on the transition of the judged values in case the judged value tends to move to exceed a predetermined threshold for determining a decrease in internal pressure.

The control unit 2 comprises the judged value memory means, the buffer for accumulating judged values, the judged value calculating means, the transition calculating means and the judging means.

In the present embodiment, the judging means includes a circuit for setting a first threshold for issuing a preliminary alarm at a smaller level than the predetermined threshold and a second threshold for issuing a preliminary alarm for indicating a predetermined number by which the judged values has consecutively exceeded the first threshold for issuing preliminary alarm.

The judging means further includes a first condition providing that the judged value is not less than the first threshold for issuing preliminary alarm and a second condition providing that a summed value which is accumulated in the judged value memory means is not less than a product of the first threshold for issuing preliminary alarm and the second threshold for issuing preliminary alarm. The alarming means further includes a preliminary alarm circuit for adding, in case the first condition is met, the judged value to the judged value memory means while giving, in case the second condition is met, a command to issue a preliminary alarm.

In the rotational information detecting means 1, pulse signals corresponding to numbers of rotation of each tyre Wi ( hereinafter referred to as "wheel speed pulse") are outputted. In the CPU 2b, rotational angular velocities $F_1$ of the respective tyres Wi are calculated at predetermined sampling periods $\Delta T$(sec), for instance, every $\Delta T$ of 1 second based on the wheel speed pulse outputted from the rotational information detecting means 1.

Since tyres Wi are manufactured with variations (initial differences) within specifications, the effective rolling radii of respective tyres Wi (values obtained by dividing a distance which has been travelled through a single rotation of the tyre by $2\pi$) are not necessarily identical even though all of the tyres Wi are at normal internal pressure. This leads to variations in rotational angular velocities $F_1$ of the respective tyres Wi. To cancel out such variations owing to initial differences, corrected rotational angular velocities $F1_i$ are calculated.

More particularly, the following corrections are made:

$$F1_1 = F_1$$

$$F1_2 = mF_2$$

$$F1_3 = F_3$$

$$F1_4 = nF_4$$

The correction coefficients m,n are obtained by calculating a rotational angular velocity $F_1$ under a condition where, for instance, the vehicle is performing straight-ahead running and obtained as $m = F_1/F_2$ and $n = F_3/F_4$ on the basis of the calculated rotational angular velocity $F_1$.

The speed V of the vehicle is calculated using the following equation based on $F1_1$.

$$V = (V1 + V2 + V3 + V4)/4$$

Here   Vi: wheel speed of the tyre (m/sec)

and i: 1 = front left tyre, 2 - front right tyre, 3 = rear left tyre, 4 = rear right tyre.

A decompression judged value (DEL) for detecting decrease in air pressure of tyre Wi is for comparing a difference of two diagonal sums of, for instance, the front tyres and rear tyres, and is obtained from the following equation (1) which is a ratio of a value obtained by subtracting a sum of signals of one pair of diagonally located wheels from a sum of signals of another pair of diagonally located wheels to an average value of the two sums:

$$\mathrm{DEL} = \{(V1+V4)/2) - (V2+V3)/2\}/\{(V1+V2+V3+V4)/4\} \times 100(\%)\ldots(1)$$

In the present embodiment, the judged values are stored and summed, and a preliminary alarm is issued if the transition of the judged values tends to move to exceed the threshold for decompression.

More particularly, a first threshold for issuing a preliminary alarm S1 and a second threshold for issuing preliminary alarm S2 are set in the period between calculation of judged values during running and issuing alarm upon determination of decompression in a predetermined manner, and the following first condition and second condition are set.

First condition: the judged value is not less than the first threshold for issuing a preliminary alarm S1.

Second condition: the value of the buffer for accumulating judged values (summed value of judged values) is not less than a product of the first threshold for issuing preliminary alarm S1 and the second threshold for issuing preliminary alarm S2 (S1xS2).

Since the judged value will be zero in the case when the respective tyres are at normal air pressure, fluctuations in judged values will not be large. Thus, the first threshold for issuing the preliminary alarm S is set to be a value which is smaller than the predetermined threshold S. Moreover, because it is possible to determine that the air pressure of a tyre is in a decreasing tendency, i.e. is falling, depending on the number of consecutive times in which the judged values exceed the first threshold for issuing preliminary alarm S1, the second threshold for issuing a preliminary alarm S2 might represent a degree thereof. For instance, in case the sampling time for the wheel speed is set to be 5 seconds, judged values are calculated at a frequency of once per each 5 seconds, and considering a case in which judged values indicating decompression, for instance, approximately 6/10 of judged values indicating decompression are consecutively calculating within at least one minute (60 seconds), the second threshold for issuing preliminary alarm S2 (degree) might be set to 12 (=60/5).

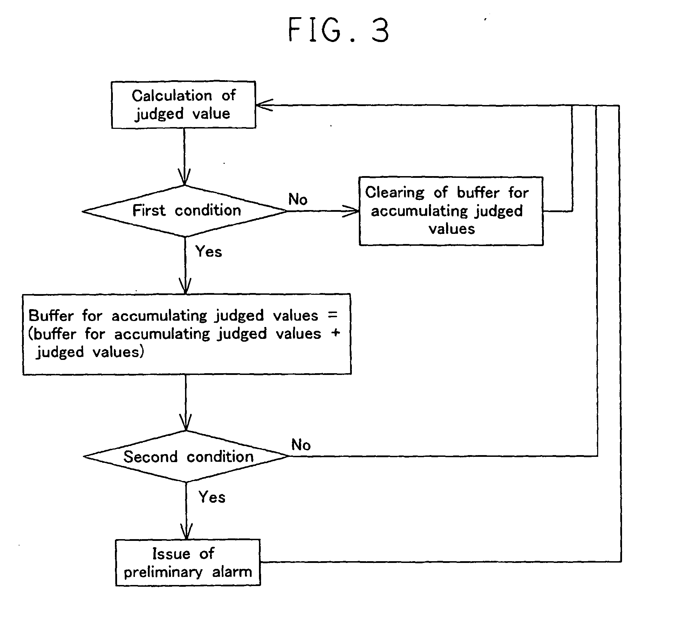

When the first condition is met as illustrated in Figure 3, the judged values are added to the buffer for accumulating judged values, and when the first condition is not met, the buffer for accumulating judged values is cleared (set to zero). Judging decompression is continuously repeated thereafter.

If the second condition is met thereafter, a preliminary alarm is issued since it is determined that the transition of the judged values is tending to move to exceed the predetermined threshold of decompression S.

With this arrangement, opportunities in which the driver of the vehicle can cope with a decreased in internal pressure of a tyre can be increased so that the driver can fill some air in a repair shop or exchange the tyre without being in haste and thus is able to continue safe driving even though there is some problem.

Wile the present invention will now be explained based on an example thereof, the present invention is not limited to such example.

EXAMPLE

A Mercedes Benz A Class type vehicle (A160) equipped with tyres (tyre sizes: 185/65R15) at normal air pressure ($21.6 \times 10^4$ Pa) was provided. In judging decompression of a tyre, the sampling time for the wheel speed was set to 5 seconds while the predetermined threshold S was set to 0.125, the first threshold for issuing preliminary alarm S1 to 0.08 and the second threshold for issuing preliminary alarm S2 to 12.

Running tests were then performed whilst decompressing the internal pressure of the right front tyre by $10^4$ Pas (0.1 bar) per each minute.

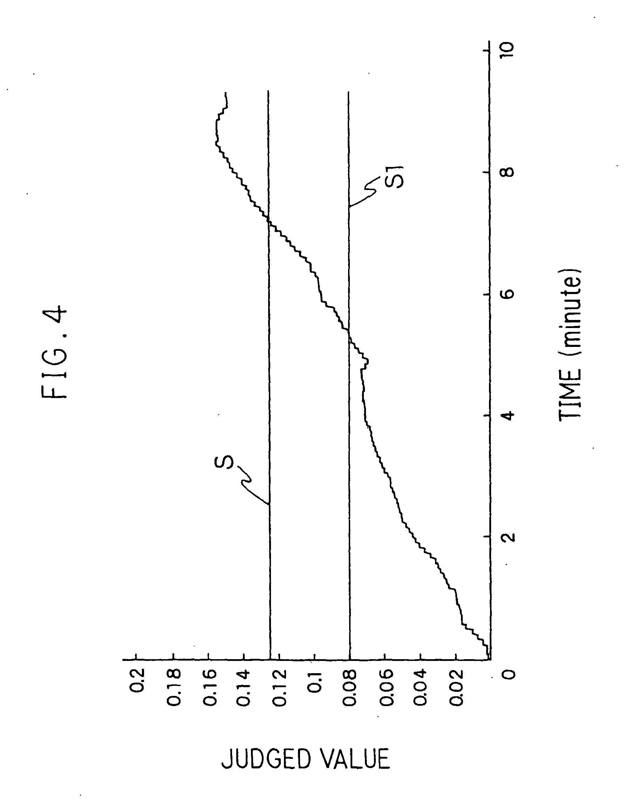

The resultant transition of judged values is illustrated in Figure 4. The judged values were accumulated and when these judged values were not less than the first threshold for issuing a preliminary alarm 0.08 (S1), and in the case of judged value for issuing preliminary alarm which is a sum of judged values, exceeded a product of the first threshold for issuing preliminary alarm 0.08 (S1) and the second threshold for issuing preliminary alarm 12 (S2), namely 0.96, it was further determined that the tyre tends to move to exceed the predetermined threshold S, and a preliminary alarm was accordingly issued after 374 seconds (6.23 minutes) from the start of running. The normal alarm for indicating decompression which is based only on the predetermined threshold was issued 60 seconds later, that is, after 434 seconds (7.23 minutes) from the start of running.

As explained so far, it is possible to appropriately inform the driver of the vehicle of a decompressed condition of a tyre to allow the driver to drive safely.

**Claims**

1.  An apparatus for alarming decrease in tyre air pressure based on rotational information obtained from tyres (Wi) attached to a vehicle, comprising
    a rotational information detecting means (1) for detecting rotational information of the respective tyres (Wi);
    a rotational information memory means (2d) for storing the rotational information of the respective tyres (Wi);
    a judged value calculating means (2b) for calculating judged values based on the rotation information of the respective tyres (Wi);
    a judged value memory means (2d) for storing the judged values;
    **characterised by**
    a transition calculating means (2b) for calculating transition of the judged values based on the stored judged values;
    a judging means (2b) for determining a decreasing tendency in tyre air pressure based on the judged values; and
    an alarming means (3) for issuing a preliminary alarm prior to issuing a predetermined alarm for informing the decreasing tendency in internal pressure based on the calculated transition of the judged values in case the judged values tend to move to exceed a predetermined threshold (S) for determining a decrease in internal pressure.

2.  An apparatus according to claim 1, **characterised in that** the judging means (2b) includes a circuit for setting
    a first threshold (S1) for issuing the preliminary alarm which is smaller than the predetermined threshold (S) and
    a second threshold (S2) for issuing the preliminary alarm for indicating a predetermined number by which the judged values has consecutively exceeded the first threshold (S1) for issuing the preliminary alarm.

3.  An apparatus according to claim 2, **characterised in that**
    the judging means (2b) further includes a first condition providing that the judged value is not less than the first threshold (S1) for issuing the preliminary alarm and a second condition providing that a summed value which is accumulated in the judged value memory means (2d) is not less than a product (S1 x S2) of the first threshold (S1) for issuing the preliminary alarm and the second threshold (S2) for issuing the preliminary alarm, and
    wherein the alarming means (3) further includes a preliminary alarm circuit for adding, in case the first condition is met, the judged value to the judged value memory means (2d) while giving, in case the second condition is met, a command for issuing the preliminary alarm.

4.  A method for alarming decrease in tyre air pressure based on rotational information obtained from tyres attached to a vehicle, comprising the step of
    detecting rotation information of the respective tyres (Wi);
    storing the rotational information of the respective tyres (Wi);
    calculating judged values based on the rotational information of the respective tyres (Wi);
    storing the judged values;
    **characterised by**
    calculating transition of the judged values based on the stored judged values;

determining a decreasing tendency in tyre air pressure based on the judged values; and

issuing a preliminary alarm prior to issuing a predetermined alarm for informing the decreasing tendency in internal pressure based on the calculated transition of the judged values in case the judged values tend to move to exceed a predetermined threshold (S) for determining a decrease in internal pressure.

5. A method according to claim 4, **characterised in that** when issuing the preliminary alarm, there are used

a first threshold (S1) for issuing the preliminary alarm which is smaller than the predetermined threshold (S) and

a second threshold (S2) for issuing the preliminary alarm for indicating a predetermined number by which the judged values has consecutively exceeded the first threshold (S1) for issuing the preliminary alarm.

6. A method according to claim 5, **characterised in that** there are set

a first condition providing that the judged value is not less than the first threshold (S1) for issuing the preliminary alarm and a second condition providing that a summed value which is accumulated in the judged value memory means is not less than a product (S1 x S2) of the first threshold (S1) for issuing the preliminary alarm and the second threshold (S2) for issuing the preliminary alarm, and

wherein the judged value is stored and added in case the judged value meets the first condition, and then the preliminary alarm is issued in the case where the added value meets the second condition.

**Patentansprüche**

1. Vorrichtung zum Warnen vor einer Abnahme eines Reifenluftdruckes auf der Basis von Rotationsinformation, die von an einem Fahrzeug angebrachten Reifen (Wi) erhalten wird, umfassend

ein Rotationsinformations-Detektionsmittel (1) zum Detektieren von Rotationsinformation von jeweiligen Reifen (Wi);

ein Rotationsinformations-Speichermittel (2d) zum Speichern der Rotationsinformation der jeweiligen Reifen (Wi);

ein Beurteilungswert-Berechnungsmittel (2b) zum Berechnen von Beurteilungswerten auf der Basis der Rotationsinformation der jeweiligen Reifen (Wi);

ein Beurteilungswert-Speichermittel (2d) zum Speichern der Beurteilungswerte;

**gekennzeichnet durch**

ein Übergangsberechnungsmittel (2b) zum Berechnen eines Überganges der Beurteilungswerte auf der Basis der gespeicherten Beurteilungswerte;

ein Beurteilungsmittel (2b) zum Bestimmen einer Abnahmetendenz des Reifenluftdruckes auf der Basis der Beurteilungswerte; und

ein Warnmittel (3) zum Ausgeben einer vorläufigen Warnung vor dem Ausgeben einer vorbestimmten Warnung zum Informieren über die Abnahmetendenz des Innendrucks auf der Basis des berechneten Übergangs der Beurteilungswerte in dem Fall, dass die Beurteilungswerte dazu tendieren, sich derart zu bewegen, dass sie einen vorbestimmten Schwellenwert (S) zum Bestimmen einer Abnahme eines Innendruckes übersteigen.

2. Vorrichtung nach Anspruch 1,
**dadurch gekennzeichnet, dass**
das Beurteilungsmittel (2b) einen Schaltkreis zum Festlegen

eines ersten Schwellenwertes (S1) zum Ausgeben der vorläufigen Warnung, der kleiner ist als der vorbestimmte Schwellenwert (S), und

eines zweiten Schwellenwertes (S2) zum Ausgeben der vorläufigen Warnung zum Anzeigen einer vorbestimmten Zahl, um welche die Beurteilungswerte aufeinanderfolgend den ersten Schwellenwert (S1) zum Ausgeben der vorläufigen Warnung überschritten haben, umfasst.

3. Vorrichtung nach Anspruch 2,
**dadurch gekennzeichnet, dass**
das Beurteilungsmittel (2b) ferner eine erste Bedingung umfasst, die dafür sorgt, dass der Beurteilungswert nicht kleiner als der erste Schwellenwert (S1) zum Ausgeben der vorläufigen Warnung ist, und eine zweite Bedingung umfasst, die dafür sorgt, dass ein summierter Wert, der in dem Beurteilungswert-Speichermittel (2d) akkumuliert ist, nicht kleiner ist als ein Produkt (S1 x S2) aus dem ersten Schwellenwert (S1) zum Ausgeben der vorläufigen Warnung und dem zweiten Schwellenwert (S2) zum Ausgeben der vorläufigen Warnung, und

wobei das Warnmittel (3) ferner einen Kreis für eine vorläufige Warnung umfasst, um in dem Fall, dass die erste Bedingung erfüllt ist, den Beurteilungswert dem Beurteilungswert-Speichermittel (2d) hinzuzufügen, während in dem Fall, dass die zweite Bedingung erfüllt ist, ein Befehl zum Ausgeben einer vorläufigen Warnung erteilt wird.

**4.** Verfahren zum Warnen vor einer Abnahme eines Reifenluftdruckes auf der Basis von Rotationsinformation, die von an einem Fahrzeug angebrachten Reifen erhalten wird, mit den Schritten, dass

Rotationsinformation der jeweiligen Reifen (Wi) detektiert wird;

die Rotationsinformation der jeweiligen Reifen (Wi) gespeichert wird;

Beurteilungswerte auf der Basis der Rotationsinformation der jeweiligen Reifen (Wi) berechnet werden;

die Beurteilungswerte gespeichert werden;

**dadurch gekennzeichnet, dass**

ein Übergang der Beurteilungswerte auf der Basis der gespeicherten Beurteilungswerte berechnet wird;

eine Abnahmetendenz des Reifenluftdruckes auf der Basis der Beurteilungswerte bestimmt wird; und

bevor eine vorbestimmte Warnung ausgegeben wird, eine vorläufige Warnung zum Informieren über die Abnahmetendenz des Innendrucks auf der Basis des berechneten Übergangs der Beurteilungswerte in dem Fall ausgegeben wird, dass die Beurteilungswerte dazu tendieren, sich derart zu bewegen, dass sie einen vorbestimmten Schwellenwert (S) zum Bestimmen einer Abnahme eines Innendruckes übersteigen.

**5.** Verfahren nach Anspruch 4,

**dadurch gekennzeichnet, dass,**

wenn die vorläufige Warnung ausgegeben wird,

ein erster Schwellenwert (S1) zum Ausgeben der vorläufigen Warnung, der kleiner ist als der vorbestimmte Schwellenwert (S), und

ein zweiter Schwellenwert (S2) zum Ausgeben der vorläufigen Warnung zum Anzeigen einer vorbestimmten Zahl, um die die Beurteilungswerte aufeinanderfolgend den ersten Schwellenwert (S1) zum Ausgeben der vorläufigen Warnung überschritten haben, verwendet werden.

**6.** Verfahren nach Anspruch 5,

**dadurch gekennzeichnet, dass**

eine erste Bedingung, die dafür sorgt, dass der Beurteilungswert nicht kleiner als der erste Schwellenwert (S1) zum Ausgeben der vorläufigen Warnung ist, und eine zweite Bedingung, die dafür sorgt, dass ein summierter Wert, der in dem Beurteilungswert-Speichermittel akkumuliert wird, nicht kleiner ist als ein Produkt (S1 x S2) aus dem ersten Schwellenwert (S1) zum Ausgeben der vorläufigen Warnung und dem zweiten Schwellenwert (S2) zum Ausgeben der vorläufigen Warnung, festgelegt werden, und

wobei der Beurteilungswert in dem Fall, dass der Beurteilungswert die erste Bedingung erfüllt, gespeichert und addiert wird, und dann die vorläufige Warnung in dem Fall ausgegeben wird, dass der addierte Wert die zweite Bedingung erfüllt.

## Revendications

**1.** Dispositif pour déclencher une alarme en cas de baisse de pression d'air dans un pneumatique, basée sur des informations de rotation obtenues à partir de pneumatiques (Wi) montés sur un véhicule, comprenant

un moyen de détection d'informations de rotation (1) pour détecter des informations de rotation des pneumatiques respectifs (Wi) ;

un moyen de mémoire d'informations de rotation (2d) pour mémoriser les informations de rotation des pneumatiques respectifs (Wi) ;

un moyen de calcul de valeurs estimées (2b) pour calculer des valeurs estimées basées sur les informations de rotation des pneumatiques respectifs (Wi) ;

un moyen de mémoire de valeurs estimées (2d) pour mémoriser les valeurs estimées ;

**caractérisé par**

un moyen de calcul de transition (2b) pour calculer la transition des valeurs estimées en se basant sur les valeurs estimées mémorisées ;

un moyen d'estimation (2b) pour déterminer une tendance à la diminution de la pression d'air en se basant sur les valeurs estimées ; et

un moyen d'alarme (3) pour délivrer une alarme préliminaire avant de délivrer une alarme prédéterminée pour informer de la tendance à la diminution de pression interne en se basant sur la transition calculée des valeurs estimées dans le cas où les valeurs estimées ont tendance à varier jusqu'à dépasser un seuil prédéterminé (S) pour déterminer une diminution de la pression interne.

**2.** Dispositif selon la revendication 1, **caractérisé en ce que** le moyen d'estimation (2b) comporte un circuit pour fixer un premier seuil (S1) pour délivrer l'alarme préliminaire, qui est inférieur au seuil prédéterminé (S) et

un second seuil (S2) pour délivrer l'alarme préliminaire pour indiquer un nombre prédéterminé de fois consécutives où les valeurs estimées ont dépassé le premier seuil (S1) pour délivrer l'alarme préliminaire.

**3.** Dispositif selon la revendication 2, **caractérisé en ce que** le moyen d'estimation (2b) comporte en outre une première condition prévoyant que la valeur estimée n'est pas inférieure au premier seuil (S1) pour délivrer l'alarme préliminaire et une seconde condition prévoyant qu'une valeur additionnée accumulée dans le moyen de mémoire de valeur estimée (2d) n'est pas inférieure au produit (S1 x S2) du premier seuil (S1) pour délivrer l'alarme préliminaire par le second seuil (S2) pour délivrer l'alarme préliminaire, et dans lequel le moyen d'alarme (3) comporte en outre un circuit d'alarme préliminaire pour ajouter la valeur estimée dans le moyen de mémoire de valeur estimée (2d) dans le cas où la première condition est satisfaite, tout en fournissant, dans le cas où la seconde condition est satisfaite, une commande pour délivrer l'alarme préliminaire.

**4.** Procédé pour déclencher une alarme en cas de baisse de pression d'air dans un pneumatique, basée sur des informations de rotation obtenues à partir de pneumatiques montés sur un véhicule, comprenant les étapes consistant à

détecter des informations de rotation des pneumatiques respectifs (Wi) ;
mémoriser les informations de rotation des pneumatiques respectifs (Wi) ;
calculer des valeurs estimées basées sur les informations de rotation des pneumatiques respectifs (Wi) ;
mémoriser les valeurs estimées ;
**caractérisé par**
le calcul de la transition des valeurs estimées en se basant sur les valeurs estimées mémorisées ;
la détermination d'une tendance à la diminution de la pression d'air basée sur les valeurs estimées ; et
la fourniture d'une alarme préliminaire avant de délivrer une alarme prédéterminée pour informer de la tendance à la diminution de pression interne en se basant sur la transition calculée des valeurs estimées dans le cas où les valeurs estimées ont tendance à varier jusqu'à dépasser un seuil prédéterminé (S) pour déterminer une diminution de la pression interne.

**5.** Procédé selon la revendication 4, **caractérisé en ce que** lors de la fourniture de l'alarme préliminaire, sont utilisés un premier seuil (S1) pour délivrer l'alarme préliminaire, qui est inférieur au seuil prédéterminé (S) et un second seuil (S2) pour délivrer l'alarme préliminaire pour indiquer un nombre prédéterminé de fois consécutives où les valeurs estimées ont dépassé le premier seuil (S1) pour délivrer l'alarme préliminaire.

**6.** Procédé selon la revendication 5, **caractérisé en ce que** sont fixées une première condition prévoyant que la valeur estimée n'est pas inférieure au premier seuil (S1) pour délivrer l'alarme préliminaire et une seconde condition prévoyant qu'une valeur additionnée accumulée dans le moyen de mémoire de valeur estimée n'est pas inférieure au produit (S1 x S2) du premier seuil (S1) pour délivrer l'alarme préliminaire par le second seuil (S2) pour délivrer l'alarme préliminaire, et dans lequel la valeur estimée est mémorisée et ajoutée dans le cas où la valeur estimée satisfait la première condition, et l'alarme préliminaire est ensuite délivrée dans le cas où la valeur ajoutée satisfait la seconde condition.

# FIG.1

# FIG. 2

# FIG. 3

```
┌──────────────────┐
│  Calculation of  │ ◄─────────────────────────────┐
│   judged value   │                                │
└──────────────────┘                                │
          │                                         │
          ▼                                         │
       ╱──────────╲          No    ┌──────────────────────────┐
      ╱  First     ╲───────────────►│ Clearing of buffer for   │
      ╲  condition ╱                │ accumulating judged      │──┐
       ╲──────────╱                 │ values                   │  │
          │                         └──────────────────────────┘  │
         Yes                                                       │
          │                                                        │
          ▼                                                        │
┌────────────────────────────────────────────┐                    │
│ Buffer for accumulating judged values =     │                    │
│ (buffer for accumulating judged values +    │                    │
│  judged values)                             │                    │
└────────────────────────────────────────────┘                    │
          │                                                        │
          ▼                                                        │
       ╱──────────────╲        No                                  │
      ╱ Second         ╲─────────────────────────────────────────┐ │
      ╲ condition      ╱                                          │ │
       ╲──────────────╱                                          │ │
          │                                                       │ │
         Yes                                                      │ │
          │                                                       │ │
          ▼                                                       │ │
┌──────────────────┐                                              │ │
│    Issue of      │──────────────────────────────────────────────┘ │
│ preliminary alarm│                                                 │
└──────────────────┘                                                 │
```

# FIG.4

**EP 1 203 675 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2226434 A
- JP 63305011 A